# EUROPEAN PATENT APPLICATION

(11) **EP 3 477 073 A1**
(43) Date of publication of application: **01.05.2019**
(21) Application number: 17903040.8
(22) Date of filing: 30.03.2017
(51) Int. Cl.: F02B 37/18

(54) **EXHAUST BYPASS DEVICE AND SUPERCHARGER**

(71) Applicant: Mitsubishi Heavy Industries Engine & Turbocharger, Ltd., Sagamihara-shi, Kanagawa 252-5293 (JP)
(72) Inventor: YOSHIMI, Takeshi, Tokyo 108-8215 (JP); ISHIZAKI, Tatsuya, Tokyo 108-8215 (JP); HAYASHI, Noriyuki, Tokyo 252-5293 (JP); EBISU, Motoki, Sagamihara-shi Kanagawa 252-5293 (JP)
(74) Representative: Mader, Joachim
(86) International application number: PCT/JP2017/013335
(87) International publication number: WO 2018/179256

(57) **Abstract**

Provided are an exhaust bypass device and a turbocharger. The present invention is provided with: an actuator (31) for reciprocating a driving-rod (41) in the axial direction; a support shaft (35) rotatably supported in a housing; a connection link (34) having one end portion and the other end portion, wherein the one end portion is rotatably connected by a connection member (33) to a tip portion of a connection rod (32) connected to the driving-rod (41), and the other end portion is fixed to one end portion in the axial direction of the support shaft (35); and a waste gate valve (37) connected to the other end portion in the axial direction of the support shaft (35). The present invention is also provided with: a connection shaft (52) provided in the connection link (34) as the connection member (33); and a bearing block (51) provided in the connection rod (32) and serving as a bearing member that rotatably supports a plurality of different parts in an axial direction of the connection shaft (52).

## Description

### Technical Field

The present invention relates to an exhaust bypass device that makes exhaust gas discharged from an engine bypass a turbine instead of flowing into the turbine, and to a turbocharger including the exhaust bypass device.

### Background Art

Turbochargers include a compressor and a turbine that are connected to each other via a rotation shaft to integrally rotate. Such a turbocharger operates in the following manner. Specifically, the turbine is rotated by exhaust gas flowing in a discharge path. The rotation of the turbine is transmitted through the rotation shaft so that the compressor rotates. The compressor compresses air and supplies the resultant air to the engine through an intake path. The turbocharger is provided with an exhaust bypass device (waste gate valve) that makes the gas bypass the turbine from a portion of the discharge path more on an upstream side than the turbine. When the engine discharges an excessive amount of exhaust gas, the waste gate valve opens so that the exhaust gas is discharged without being supplied to the turbine, whereby boost pressure can be prevented from being excessively risen by increased rotation of the turbine. Thus, a higher operating point of the exhaust gas flow rate under a low load condition is achieved for achieving a higher output of the engine.

The exhaust bypass device used for the turbocharger is configured in the following manner. Specifically, an actuator incorporating a pneumatic bellows and a spring rotates a lever plate, so that a waste gate valve connected to a rotation shaft of the lever plate opens and closes. Thus, in a state where supplying of work fluid to the bellows is stopped, the waste gate valve closes the bypass path with spring force of the spring member. When the work fluid is supplied to the bellows, the waste gate valve rotates against the spring force of the spring member to open the bypass path.

Such an exhaust bypass device is disposed inside the turbine housing, and thus the components thereof may be exposed to a high temperature atmosphere to have a sliding portion adhered. The actuator is operated by intake pressure, and thus variation of the intake pressure caused by exhaust pulsation of the engine may lead to flapping of the waste gate valve resulting in vibration which may wear the sliding portion. An example of such an exhaust gas turbine turbocharger is disclosed in Patent Document 1 described below.

### Citation List

### Patent Documents

Patent Document 1: JP 2014-506650 T

### Summary of Invention

### Problem to be Solved by the Invention

An operation device for an exhaust gas turbocharger described in Patent Document 1 described above has the following configuration. Specifically, two operation members are rotatably connected, with an operation rod connected to one of the operation membersportions and a lever member rotatably connected to the other one of the operation membersportions. This configuration requires cumbersome operations for assembling these components, and results in a large device requiring a large space to be disposed.

The present invention is made to solve the problem described above, and an object of the present invention is to provide an exhaust bypass device and a turbocharger that can reduce wearing of an operation portion to improve reliability, while ensuring a favorable operation of a waste gate valve.

### Solution to Problem

An exhaust bypass device according to the present invention for achieving the object described above includes: an actuator that reciprocates a driving rod in an axial direction; a support shaft rotatably supported by a housing: a connection link that has one end portion rotatably connected to a tip portion of the driving rod via a connection member, and another end portion fixed to one end portion of the support shaft in the axial direction; and a waste gate valve that is connected to the other end portion of the support shaft in the axial direction, wherein the connection member includes: a connection shaft that is provided to one of the driving rod and the connection link; and a bearing member that is provided to the other one of the driving rod and the connection link, and rotatably supports a plurality of different parts in an axial direction of the connection shaft.

With this configuration, when the driving rod of the actuator is driven, the resultant driving force is transmitted to the connection link via the connection member. As a result, the connection link rotates about the support shaft to open/close the waste gate valve. When the connection shaft rotates relative to the bearing member, a plurality of different parts in an axial direction of the outer circumference surface of the connection shaft are supported by the bearing member, so that application of the moment to the connection shaft is suppressed, whereby the connection shaft can be prevented from tilting relative to the bearing member. As a result, vibration of the connection link due to the exhaust pulsation is suppressed, whereby the wearing of the operation portion can be suppressed to improve reliability, with a favorable operation of the waste gate valve ensured.

The exhaust bypass device according to the present invention further includes a first locking member that restricts relative movement between the connection shaft and the bearing member in the axial direction of the connection shaft.

Thus, when the connection rod and the connection link move via the connection member, the connection shaft rotates relative to the bearing member. Still, the first locking member restricts the movement of the connection shaft in the axial direction relative to the bearing member, whereby the connection shaft can be prevented from falling off the bearing member and the connection shaft can be prevented from tilting relative to the bearing member.

In the exhaust bypass device according to the present invention, the first locking member is a pair of locking pins that each penetrate, along a radial direction, corresponding one of end portions of the connection shaft in the axial direction, and each of ends of the pair of locking pins in a longitudinal direction is able to come into contact with the bearing member.

Thus, the pair of locking pins each penetrating corresponding one of the end portions of the connection shaft can have a simplified structure to prevent part cost from rising. Each of the ends of the pair of locking pins coming into contact with the bearing member, so that the connection shaft can be prevented from falling off the bearing member, and the tilting of the connection shaft relative to the bearing member can be suppressed.

In the exhaust bypass device according to the present invention, the first locking member is a pair of pressing members supported by the bearing member, and the pair of pressing members are able to come into contact with the one of the driving rod or the connection link to which the connection shaft is provided.

Thus, the first locking member is the pair of pressing members supported by the bearing member and coming into contact with the one of the driving rod or the connection link to which the connection shaft is provided, so that the connection shaft can be prevented from falling off the bearing member, and the tilting of the connection shaft relative to the bearing member can be suppressed.

In the exhaust bypass device according to the present invention, the first locking member is a slit provided to the bearing member, and the one of the driving rod and the connection link to which the connection shaft is provided is inserted in the slit.

The configuration with the slit thus serving as the first locking member can have a simplified structure to prevent part cost from rising. The configuration further has the connection link provided with the connection shaft inserted in the slit, so that the connection shaft 52 can be prevented from falling off the bearing member in the axial direction, and the tilting of the connection shaft relative to the bearing member can be suppressed.

In the exhaust bypass device according to the present invention, the first locking member is an elastic member.

Accordingly, the first locking member being an elastic member can absorb vibrations acting on the connection rod, the connection link, and the connection shaft.

The exhaust bypass device according to the present invention further includes a second locking member that restricts relative movement between the connection shaft and the bearing member in a radial direction of the connection shaft.

Thus, when the connection rod and the connection link move via the connection member, the connection shaft rotates relative to the bearing member. Still, the second locking member restricts the movement of the connection shaft in the radial direction relative to the bearing member, whereby the connection shaft can be prevented from falling off the bearing member.

In the exhaust bypass device according to the present invention, the second locking member is provided to the bearing member and is able to come into contact with the outer circumference surface of the connection shaft.

Thus, with the second locking member provided to the bearing member in contact with the outer circumference surface of the connection shaft, the movement of the connection shaft in the radial direction relative to the bearing member is restricted, whereby this simple configuration can easily prevent the connection shaft from falling off from the bearing member.

In the exhaust bypass device according to the present invention, the bearing member is a bearing block provided with an opening to have a side portion open, and in the opening, the connection shaft is disposed and a pair of support surfaces are provided that each rotatably support an outer circumference surface of a corresponding one of end portions of the connection shaft in the axial direction.

Thus, when the connection rod and the connection link move via the connection member, the connection shaft rotates relative to the bearing member. Still, the outer circumference surfaces of the end portions of the connection shaft in the axial direction are rotatably supported by the pair of support surfaces, so that application of the moment to the connection shaft is suppressed. As a result, wearing of the operation portion can be reduced, while ensuring a favorable operation of the waste gate valve.

In the exhaust bypass device according to the present invention, the bearing member is a bearing block having a center portion provided with an opening, in the opening, the connection shaft is disposed and a pair of support surfaces are provided that each rotatably support an outer circumference surface of a corresponding one of end portions of the connection shaft in the axial direction, and the driving rod or the connection link is inserted through the bearing block to be connected to the connection shaft.

Thus, when the connection rod and the connection link move via the connection member, the connection shaft rotates relative to the bearing member. Still, the outer circumference surfaces of the end portions of the connection shaft in the axial direction are rotatably supported by the pair of support surfaces, so that application of the moment to the connection shaft is suppressed. As a result, wearing of the operation portion can be reduced, while ensuring a favorable operation of the waste gate valve.

In the exhaust bypass device according the present invention, the connection shaft is detachably connected to the one of the driving rod and the connection link.

Thus, the driving rod and the connection link are connected to each other via the connection member, and then the connection shaft can be attached, which enables easy assembly.

A turbocharger according to the present invention includes: a compressor; a turbine; a rotation shaft that coaxially connects the compressor and the turbine to each other; and the exhaust bypass device.

When the connection shaft rotates relative to the bearing member with the waste gate valve opened/closed while the turbocharger is operating, a plurality of different parts in an axial direction of the outer circumference surface are supported by the bearing member, so that application of the moment to the connection shaft is suppressed, whereby the connection shaft can be prevented from tilting relative to the bearing member. As a result, vibration of the connection link due to the exhaust pulsation is suppressed, whereby the wearing of the operation portion can be suppressed to improve reliability, with a favorable operation of the waste gate valve ensured.

### Advantageous Effect of Invention

With the exhaust bypass device and the turbocharger according to the present invention, the wearing of the operation portion can be suppressed to improve reliability, with a favorable operation of the waste gate valve ensured.

### Brief Description of Drawings

FIG. 1 is a schematic configuration diagram of an engine to which an exhaust bypass device according to a first embodiment is applied.
FIG. 2 is a perspective view illustrating an overall configuration of the exhaust bypass device.
FIG. 3 is a perspective view illustrating a connection member that connects a connection rod and a connection link to each other in the exhaust bypass device.
FIG. 4 is a vertical cross-sectional view illustrating the connection member that connects the connection rod and the connection link to each other.
FIG. 5 is a plan view illustrating the connection member that connects the connection rod and the connection link to each other.
FIG. 6 is a perspective view of a connection member that connects a connection rod and a connection link to each other in an exhaust bypass device according to a second embodiment.
FIG. 7 is a vertical cross-sectional view of the connection member that connects the connection rod and the connection link to each other.
FIG. 8 is a plan view of the connection member that connects the connection rod and the connection link to each other.
FIG. 9 is a vertical cross-sectional view of a connection member that connects a connection rod and a connection link to each other in an exhaust bypass device according to a third embodiment.
FIG. 10 is a plan view of the connection member that connects the connection rod and the connection link to each other.
FIG. 11 is a plan view illustrating a connection member that connects a connection rod and a connection link to each other, in an exhaust bypass device according to a modification of the third embodiment.
FIG. 12 is a perspective view of a connection member that connects a connection rod and a connection link to each other in an exhaust bypass device according to a fourth embodiment.
FIG. 13 is a vertical cross-sectional view of the connection member that connects the connection rod and the connection link to each other.
FIG. 14 is a plan view of the connection member that connects the connection rod and the connection link to each other.
FIG. 15 is a perspective view of an assembled state illustrating a connection member that connects a connection rod and a connection link to each other in an exhaust bypass device according to a fifth embodiment.
FIG. 16 is a plan view of the connection member that connects the connection rod and the connection link to each other.
FIG. 17 is a vertical cross-sectional view of a connection member that connects a connection rod and a connection link to each other in an exhaust bypass device according to a sixth embodiment.
FIG. 18 is a plan view of the connection member that connects the connection rod and the connection link to each other.
FIG. 19 is a plan view of a connection member that connects a connection rod and a connection link to each other in an exhaust bypass device according to a seventh embodiment.
FIG. 20 is a vertical cross-sectional view of the connection member that connects the connection rod and the connection link to each other, taken along line XX-XX in FIG. 19.

### Description of Embodiments

Preferred embodiments of an exhaust bypass device and a turbocharger according to the present invention are described in detail below with reference to the attached drawings. Note that the present invention is not limited by these embodiments, and when a plurality of embodiments is present, the present invention is intended to include a configuration combining these embodiments.

### First Embodiment

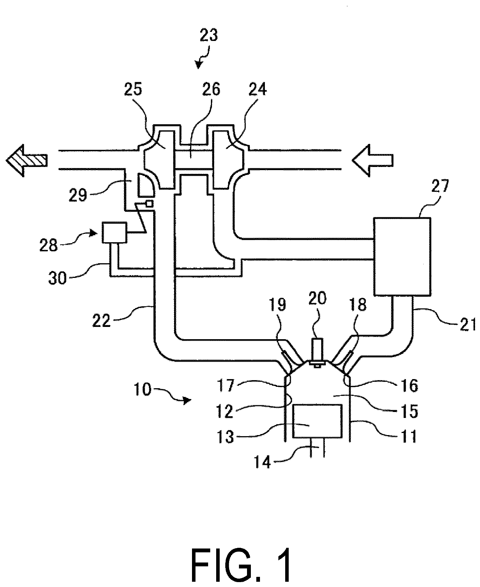

FIG. 1 is a schematic configuration diagram of an engine to which an exhaust bypass device according to a first embodiment is applied.

An engine 10 according to the first embodiment is a multi-cylinder internal combustion engine as illustrated in FIG. 1. An engine main body 11, formed with a cylinder head fastened on a cylinder block, is provided with a plurality of cylinder bores 12. A piston 13 is supported in each of the cylinder bores 12 via a cylinder liner (not illustrated) to be movable upward and downward. Although not elaborated in the figure, the engine main body 11 has a lower portion rotatably supporting a crankshaft. Each piston 13 is connected to the crankshaft via a connecting rod 14.

A combustion chamber 15 is defined by a wall surface and a bottom surface of the cylinder bore 12 and a top surface of the piston 13. The combustion chamber 15 has an intake port 16 and a discharge port 17 arranged on its upper side, that is, on the engine main body 11. An intake valve 18 and a discharge valve 19 have lower end portions respectively positioned at the intake port 16 and the discharge port 17. The intake valve 18 and the discharge valve 19 are supported by the engine main body 11 in such a manner as to be movable along an axial direction, and are supported while being biased in a direction (the upward direction in FIG. 1) to close the intake port 16 and the discharge port 17. The intake valve 18 and the discharge valve 19 can open and close the intake port 16 and the discharge port 17 with operations of an intake cam and a discharge cam of an intake cam shaft and a discharge cam shaft (not illustrated). The combustion chamber 15 has a fuel injection valve 20 provided on its upper side, that is, on the engine main body 11. High-pressure fuel can be injected into the combustion chamber 15 through the fuel injection valve 20.

With this configuration, the engine 10 performs four strokes (intake stroke, compression stroke, expansion stroke, and exhaust stroke), while the crankshaft rotates twice. In this process, the intake cam shaft and the discharge cam shaft rotate for a single time, and the intake valve 18 and the discharge valve 19 open and close the intake port 16 and the discharge port 17.

The engine main body 11 has the intake port 16 and the discharge port 17 respectively connected to an intake path 21 and a discharge path 22. The turbocharger 23 includes a compressor 24 and a turbine 25 connected to each other via a rotation shaft 26 to integrally rotate. Such a turbocharger 23 operates in the following manner. Specifically, the turbine 25 is rotated by exhaust gas flowing in the discharge path 22 of the engine main body 11. The rotation of the turbine 25 is transmitted through the rotation shaft 26 so that the compressor 24 rotates. The compressor 24 compresses air and supplies the resultant air to the engine main body 11 through the intake path 21. An intercooler 27 is attached to the intake path 21.

The discharge path 22 is provided with an exhaust bypass device 28 corresponding to the attached position of the turbine 25. The discharge path 22 includes a bypass path 29 that is branched off at a position of the discharge path 22 on the upstream side of the turbine 25 in a flow direction of the exhaust gas, and is connected to a position of the discharge path 22 on a downstream side of the turbine 25 in the flow direction of the exhaust gas. An operation path 30 has one end portion connected between the compressor 24 and the intercooler 27 in the intake path 21, and has the other end portion connected to the actuator of the exhaust bypass device 28. Although not elaborated in the figure, the operation path 30 is provided with a three-way solenoid valve with which a time period during which the actuator is in communication with the intake path 21, and a time period during which the actuator is in communication with the atmosphere are alternately switched. With the ratio between the time periods changed, the pressure in the actuator can be set based on an appropriate ratio between intake pressure and atmospheric pressure. Thus, the exhaust bypass device 28 can adjust the amount of exhaust gas that bypasses the turbine 25, that is, the amount of exhaust gas supplied to the turbine 25 by opening and closing the bypass path 29 with the intake pressure in the intake path 21.

Thus, in the engine main body 11, when air is supplied from the intake path 21 to the combustion chamber 15, the piston 13 rises so that the air is compressed, and when the high-pressure fuel is injected into the combustion chamber 15 from the fuel injection valve 20, the high-pressure fuel is ignited and burns. The resultant combustion gas is discharged to the discharge path 22 as exhaust gas. The exhaust gas discharged from the combustion chamber 15 rotates the turbine 25 of the turbocharger 23, so that the compressor 24 is rotated via the rotation shaft 26, whereby turbocharging is performed on the combustion chamber 15. When the bypass path 29 is opened by the exhaust bypass device 28, the exhaust gas passes through the bypass path 29 to bypass the turbine 25.

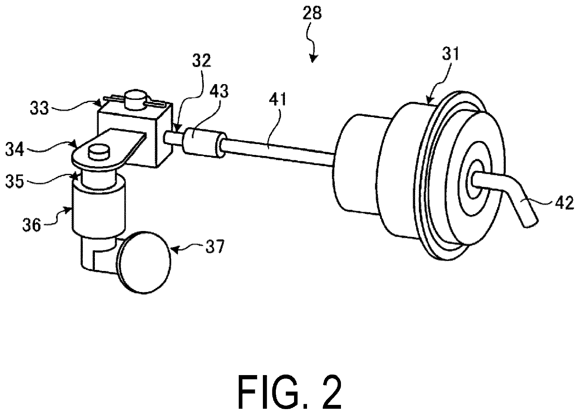

The exhaust bypass device 28 will be described. FIG. 2 is a perspective view illustrating an overall configuration of the exhaust bypass device.

As illustrated in FIG. 2, the exhaust bypass device 28 includes an actuator 31, a connection rod 32, a connection member 33, a connection link 33, a support shaft 35, a support cylinder (bush) 36, and a waste gate valve 37.

The actuator 31 is provided with a driving-rod 41, and reciprocates the driving-rod 41 in the axial direction, in accordance with the intake pressure. Although not elaborated in the figure, the actuator 31 has an inner space partitioned into two chambers by a gate valve to which a base end portion of the driving-rod 41 is connected. The gate valve is biased in a direction (right direction in FIG. 2) to which the driving-rod 41 is pulled in, with biasing force of a spring contained in one of the chambers. An application tube 42 (operation path 30) with which the intake pressure is applied is connected to the other one of the chambers. Thus, in the actuator 31, the driving-rod 41 is stopped at a position as a result of being pulled in by the biasing force of the spring applied to the gate valve. Then, when the intake pressure is applied to the other chamber through the application tube 42, the gate valve moves against the biasing force of the spring, and the driving-rod 41 that is integrated with the gate valve moves in a protruding direction.

The driving-rod 41 has a tip portion to which a base end portion of the connection rod 32 is connected via a connection portion 43. The driving-rod 41, the connection portion 43, and the connection rod 32 are substantially linearly disposed. The support shaft 35 has a circular column shape, and is rotatably supported by the support cylinder 36 that has a cylindrical shape and is fixed to a housing (not illustrated). A gap large enough for the support shaft 35 to rotate relative to the support cylinder 36 is provided between the outer circumference surface of the support shaft 35 and the inner circumference surface of the support cylinder 36.

The connection link 34 has a shape of a plate having a predetermined thickness, has one end portion rotatably connected to the tip portion of the connection rod via the connection member 34, and has the other end portion fixed to one end portion in the axial direction of the support shaft 35. The waste gate valve 37 is fixed to the other end portion of the support shaft 35 in the axial direction. Thus, the connection link 34 and the waste gate valve 37 can rotate about the support shaft 35.

With this configuration, the longitudinal direction (linear direction) of the driving-rod 41, the connection portion 43, and the connection rod 32 is substantially orthogonal to the axial direction of the support shaft 35. The axial direction of a connection shaft 52 of the connection link 34 is substantially parallel with the axial direction of the support shaft 35.

Thus, when the actuator 31 operates, the driving-rod 41 moves in the protruding axial direction to protrude, and the connection rod 32 moves in the same direction via the connection portion 43. When the connection rod 32 moves in the longitudinal direction, the connection rod 32 and the connection link 34 rotate relative to each other about the connection member 33, and the connection link 34 rotates about the support shaft 35 together with the support shaft 35. When the support shaft 35 rotates, the waste gate valve 37 integrally provided to the support shaft 35 moves from a closed position to an open position.

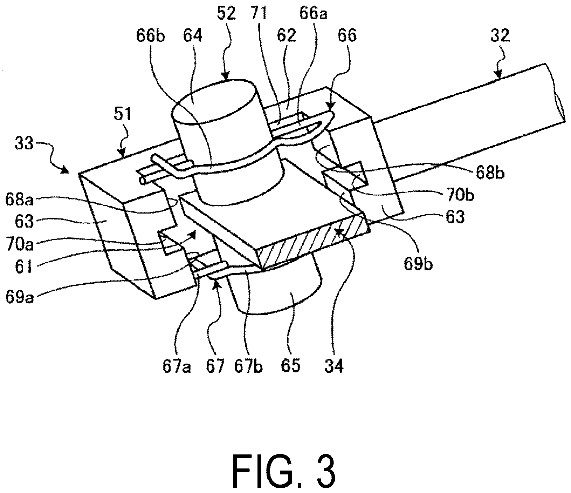

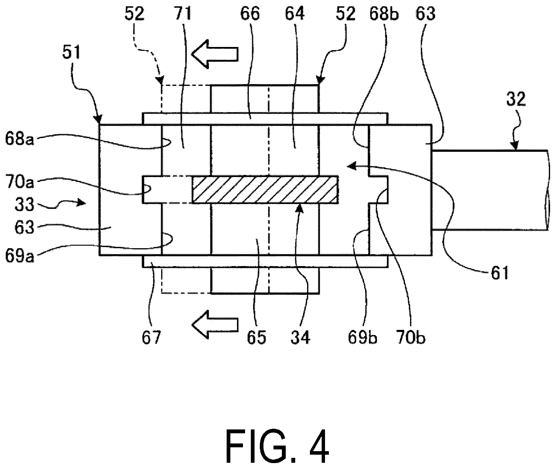

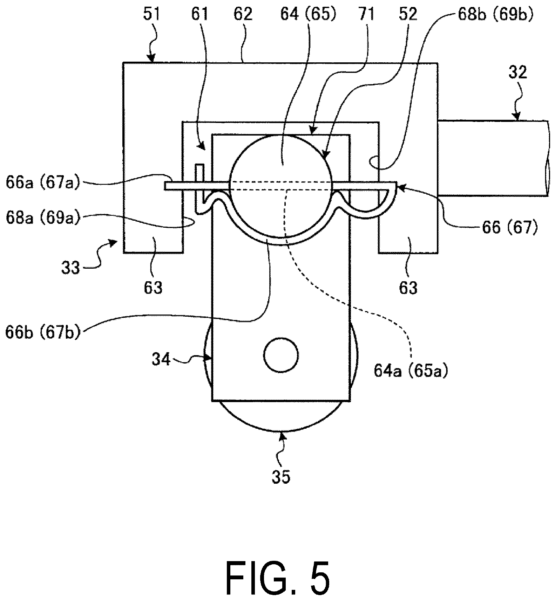

The connection member 33 is described in detail. FIG. 3 is a perspective view illustrating a connection member that connects a connection rod and a connection link to each other in the exhaust bypass device. FIG. 4 is a vertical cross-sectional view illustrating the connection member that connects the connection rod and the connection link to each other. FIG. 5 is a plan view illustrating the connection member that connects the connection rod and the connection link to each other.

The connection rod 32 has a base end portion connected to a tip portion of the driving rod 41 via the connection portion 43 and has a tip portion connected to the connection member 33, as illustrated in FIG. 3 to FIG. 5. The connection link 34 has one end portion rotatably connected to the connection member 33.

The connection member 33 includes a bearing block 51 serving as a bearing member, and a connection shaft 52. The bearing block 51 is fixed to the tip portion of the connection rod 32, and the connection shaft 52 is fixed to one end portion of the connection link 34. The bearing block 51 can rotatably support a plurality of different parts in an axial direction of the connection shaft 52.

The bearing block 51 has a U shape in plan view, and has an opening 61 to have a side portion open. Specifically, the bearing block 51 is a U shaped frame member having second support bodies 63 integrally provided on both sides of a first support body 62. The bearing block 51 has the tip portion of the connection rod 32 fixed to the second support body 63. The connection shaft 52 is fixed while being provided through one end portion of the connection link 34 in a thickness direction, and thus includes a first connection shaft that protrudes toward one side of the connection link 34 in the thickness direction and a second connection shaft 65 that protrudes toward the other side in the thickness direction.

The connection shaft 52 is disposed in the opening 61 of the bearing block 51, with the axial direction of the connection shaft 52 being orthogonal to the longitudinal direction of the bearing block 51 (the movement direction of the connection rod 32). The connection shaft 52 has the first connection shaft 64 protruding in one direction from the opening 61 of the bearing block 51, and has the second connection shaft 65 protruding in the other direction from the opening 61 of the bearing block 51. Locking pins 66 and 67 serving as a first locking member are attached to the connection shaft 52 to restrict the movement of the connection shaft 52 in the axial direction relative to the bearing block 51 restricted.

The connection shaft 52 has through holes 64a and 65a formed in the radial direction through center potions of respective tip portions of the first connection shaft 64 and the second connection shaft 65. The locking pins 66 and 67 are elastic members and have straight line portions 66a and 67a and curved portions 66b and 67b. The first locking pin 66 is detachably attached to the first connection shaft 64, with the straight line portion 66a provided through the through hole 64a and the curved portion 66b in close contact with the outer circumference surface of the first connection shaft 64. The second locking pin 67 is detachably attached to the second connection shaft 65, with the straight line portion 67a provided through the through hole 65a of the second connection shaft 65 and the curved portion 67b in close contact with the outer circumference surface of the second connection shaft 65. End portions in the longitudinal direction of the locking pins 66 and 67 can come into contact with the second support bodies 63 of the bearing block 51. Thus, the locking pins 66 and 67 prevent the connection shaft 52 of the connection link 34 from falling off from the opening 61 of the bearing block 51 of the connection rod 32 in the axial direction.

The second support bodies 63 of the bearing block 51 have inner surfaces including first support surfaces 68a and 68b, second support surfaces 69a and 69b, and groove portions 70a and 70b. The first support surfaces 68a and 68b face the outer circumference surface of the first connection shaft 64, and the second support surfaces 69a and 69b face the second connection shaft 65. The groove portions 70a and 70b are positioned between the first support surfaces 68a and 68b and the second support surfaces 69a and 69b. The bearing block 51 has a third support surface 71 provided on the inner surface of the first support body 62. The third support surface 71 faces the outer circumference surfaces of the first connection shaft 64 and the second connection shaft 65. The depths of the groove portions 70a and 70b from the support surfaces 68a, 68b, 69a, and 69b are set to be larger than the protruding amount of the connection link 34 protruding in the radiation direction from the outer circumference surface of the connection shaft 52.

Thus, when the connection shaft 52 moves toward one side in the radial direction relative to the bearing block 51, the connection link 34 fits in the groove portion 70a, and the outer circumference surfaces of the first connection shaft 64 and the second connection shaft 65 respectively come into contact with the first support surface 68a and the second support surface 69a (two dot chained line in FIG. 4). Thus, application of moment to the connection shaft 52 is suppressed, whereby the angle of the connection shaft 52 relative to the bearing block 51 does not change. Similarly, when the connection shaft 52 moves toward the other side in the radial direction relative to the bearing block 51, the connection link 34 fits in the groove portion 70b, and the outer circumference surfaces of the first connection shaft 64 and the second connection shaft 65 respectively come into contact with the first support surface 68b and the second support surface 69b. Thus, application of moment to the connection shaft 52 is suppressed, whereby the angle of the connection shaft 52 relative to the bearing block 51 does not change. The outer circumference surfaces of the first connection shaft 64 and the second connection shaft 65 each also come into contact with the third support surface 71, so that application of moment to the connection shaft 52 is suppressed, whereby the angle of the connection shaft 52 relative to the bearing block 51 does not change.

The opening 61 of the bearing block 51 has a rectangular column shape, while the connection shaft 52 has a circular column shape. Alternatively, the opening 61 may have an arch shape, that is, a U shape in plan view, along the outer circumference surface of the connection shaft 52. FIG. 3 to FIG. 5 illustrate a large gap between the connection shaft 52 and the opening 61. Note that the gap only needs to be large enough for the bearing block 51 and the connection shaft 52 to rotate relative to each other.

In the exhaust bypass device 28 with the configuration described above, when the connection rod 32 moves in the axial direction, the connection link 34 rotates about the connection member 33. More specifically, the connection link 34 rotates about the connection shaft 52 relative to the bearing block 51. When the connection shaft 52 rotates relative to the bearing block 51, the radial direction movement results in the outer circumference surfaces of the first connection shaft 64 and the second connection shaft 65 coming into contact with the support surfaces 68a, 68b, 69a, 69b, and 71, whereby the connection shaft 52 is prevented from tilting relative to the bearing block 51. As a result, even when the exhaust pulsation that would vibrate the waste gate valve 37 is applied (see FIG. 2), the connection link 34 is supported by the support surfaces 68a, 68b, 69a, 69b, and 71 to have the position retained, and thus its vibration is suppressed. Thus, the sliding portions between the connection rod 32 and the connection link 34 and between the support shaft 35 and the support cylinder 36 can be prevented from wearing.

The exhaust bypass device according to the first embodiment includes the actuator 31 that reciprocates the driving rod 41 in the axial direction, the support shaft 35 rotatably supported by the housing, the connection link 34 that has one end portion rotatably connected to a tip portion of the connection rod 32 connected to the driving rod 41 via the connection member 33, and another end portion fixed to one end portion of the support shaft 35 in the axial direction, and the waste gate valve 37 that is connected to the other end portion of the support shaft 35 in the axial direction. The connection member 33 includes the connection shaft 52 that is provided to the connection link 34, and the bearing block 51 that is provided to the connection rod 32 and rotatably supports a plurality of different parts in the axial direction of the connection shaft 52.

With this configuration, when the driving rod 41 of the actuator 31 is driven, the resultant driving force is transmitted to the connection link 34 via the connection member 33. As a result, the connection link 34 rotates about the support shaft 35 to open/close the waste gate valve 37. In this process, when the connection shaft 52 rotates relative to the bearing block 51, a plurality of different parts in an axial direction of the outer circumference surface are supported by the bearing block 51, so that application of the moment to the connection shaft 52 is suppressed, whereby the connection shaft 52 can be prevented from tilting relative to the bearing block 51. As a result, vibration of the connection link 34 due to the exhaust pulsation is suppressed. Thus, this configuration can reduce the wearing of the operation portion to improve reliability, while ensuring a favorable operation of the waste gate valve 37.

The exhaust bypass device according to the first embodiment includes the locking pins 66 and 67 serving as the first locking member that restricts the movement of the connection shaft 52 in the axial direction relative to bearing block 51. Thus, when the connection rod 32 and the connection link 34 move via the connection member 33, the connection shaft 52 rotates relative to the bearing block 51. Still, the locking pins 66 and 67 restrict the movement of the connection shaft 52 in the axial direction relative to the bearing block 51, whereby the connection shaft 52 can be prevented from falling off the bearing block 51 in the axial direction and the connection shaft 52 can be prevented from tilting relative to the bearing block 51.

The pair of locking pins 66 and 67 serving as the first locking member are provided through the end portions in the axial direction of the connection shaft 52 in the radial direction. The end portions of the pair of locking pins 66 and 67 can come into contact with the bearing block 51. Thus, the connection shaft 52 can be easily prevented from falling off the bearing block 51 in the axial direction with a simple structure that can suppress an increase in the component cost.

In the exhaust bypass device according to the first embodiment, the locking pins 66 and 67 serving as the first locking member are elastic members, and thus can absorb vibrations acting on the connection rod 32, the connection link 34, the connection shaft 52, and the like.

In the exhaust bypass device according to the first embodiment, the opening 61 is provided so that the bearing block 51 has a side portion open, the connection shaft 52 is provided in the opening 61, and the inner surface of the opening 61 includes the pairs of support surfaces 68a, 68b, 69a, 69b, 71a, and 71b that rotatably support the outer circumference surfaces of the first connection shaft 64 and the second connection shaft 65. Thus, when the connection rod 32 and the connection link 34 rotate via the connection member 33, the connection shaft 52 rotates relative to the bearing block 51 with the support surfaces 68a, 68b, 69a, 69b, 71a, and 71b rotatably supporting the outer circumference surfaces of the first connection shaft 64 and the second connection shaft 65 forming the connection shaft 52. Thus, even when swinging force is applied to the connection shaft 52, the outer circumference surfaces of the first connection shaft 64 and the second connection shaft 65 come into contact with the support surface 68a, 68b, 9a, 69b, 71a, and 71b so that two point support is achieved to suppress application of the rotational moment about the connection link 34 to the connection shaft 52. As a result, this configuration can reduce wearing of the operation portion, while ensuring a favorable operation of the waste gate valve 37.

The turbocharger according to the first embodiment includes the compressor 24, the turbine 25, the rotation shaft 26 that coaxially connects the compressor 24 and the turbine 25 to each other, and the exhaust bypass device 28. Thus, during the operation of the turbocharger 23, when the waste gate valve 37 is opened and closed and the connection shaft 52 rotates relative to the bearing block 51, the plurality of different parts in the axial direction of the outer circumference surface of the connection shaft 52 are supported by the bearing block 51. Thus, application of the moment to the connection shaft 52 is suppressed, whereby tilting of the connection shaft 52 relative to the bearing block 51 is suppressed. As a result, vibration of the connection link 34 due to the exhaust pulsation is suppressed. Thus, this configuration can reduce the wearing of the operation portion to improve reliability, while ensuring a favorable operation of the waste gate valve 37.

### Second Embodiment

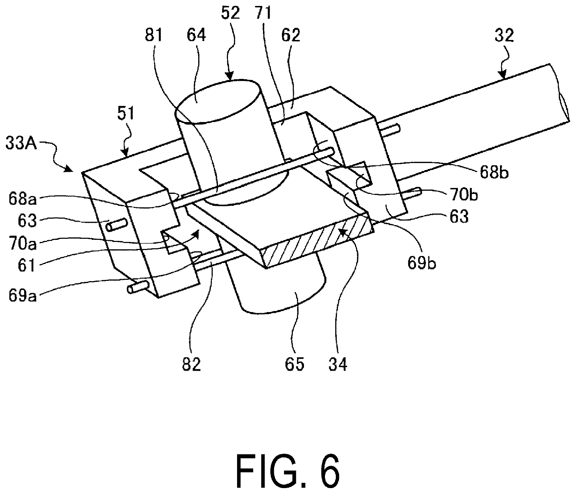

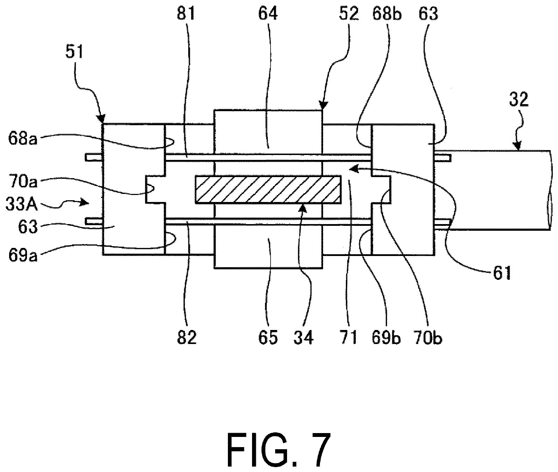

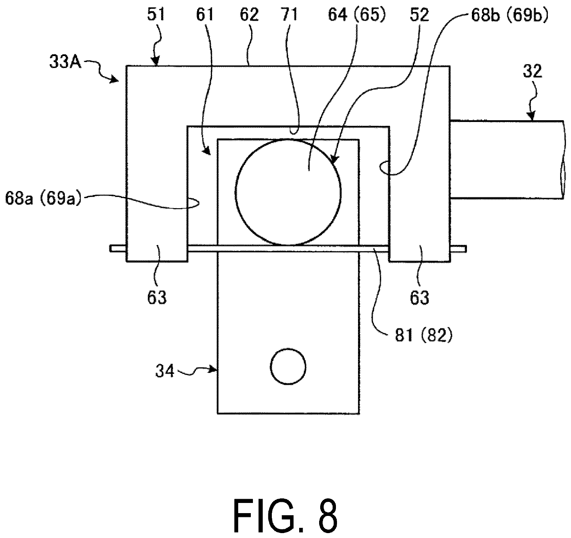

FIG. 6 is perspective view of a connection member that connects a connection rod and a connection link to each other in an exhaust bypass device according to a second embodiment. FIG. 7 is a vertical cross-sectional view of the connection member that connects the connection rod and the connection link to each other. FIG. 8 is a plan view of the connection member that connects the connection rod and the connection link to each other. Note that the same reference numerals are given to members having the same functions as the embodiments described above and detailed description thereof will be omitted.

In the exhaust bypass device according to the second embodiment, the connection rod 32 has a tip portion connected to a connection member 33A as illustrated in FIG. 6 to FIG. 8. The connection link 34 has one end portion rotatably connected to the connection member 33A.

The connection member 33A includes a bearing block 51, and a connection shaft 52. The bearing block 51 is fixed to the tip portion of the connection rod 32, and the connection shaft 52 is fixed to one end portion of the connection link 34. The bearing block 51 can rotatably support a plurality of different parts in an axial direction of the connection shaft 52.

The bearing block 51 has an opening 61. Specifically, the bearing block 51 has second support bodies 63 integrally provided on both sides of a first support body 62. The connection shaft 52 includes a first connection shaft that protrudes toward the one side of the connection link 34 in the thickness direction and a second connection shaft 65 that protrudes toward the other side in the thickness direction. The connection shaft 52 is disposed in the opening of the bearing block 51.

The bearing block 51 includes the locking pins 81 and 82 serving as the second locking member that restricts the movement of the connection shaft 52 in the radial direction relative to bearing block 51. The locking pins 81 and 82 are elastic members. The first locking pin 81 is disposed on one side of the connection link 34 in the thickness direction, and has end portions in the axial direction provided through the second support bodies 63 to be supported. The second locking pin 82 is disposed on the other side of the connection link 34 in the thickness direction, and has end portions in the axial direction provided through the second support bodies 63 to be supported. The locking pins 81 and 82 have intermediate portions that can come into contact with the outer circumference surfaces of the respective connection shafts 64 and 65. Thus, the locking pins 81 and 82 prevent the connection shaft 52 of the connection link 34 from falling off from the opening 61 of the bearing block 51 of the connection rod 32 in the radial direction. The locking pins 81 and 82 may be the locking pins 66 and 67 according to the first embodiment.

The second support bodies 63 of the bearing block 51 have inner surfaces including first support surfaces 68a and 68b, second support surfaces 69a and 69b, and groove portions 70a and 70b. The bearing block 51 has a third support surface 71 provided on the inner surface of the first support body 62. Thus, when the connection shaft 52 moves in the radial direction relative to the bearing block 51, the connection link 34 fits in the groove portion 70a or 70b, and the outer circumference surfaces of the first connection shaft 64 and the second connection shaft 65 respectively come into contact with the first support surface 68a, 68b, the second support surface 69a, 69b, and the third support surface 71. This also contributes to the suppression of the application of moment to the connection shaft 52, whereby the angle of the connection shaft 52 relative to the bearing block 51 does not change.

In the exhaust bypass device, when the connection rod 32 moves in the axial direction, the connection link 34 rotates about the connection member 3A. When the connection shaft 52 rotates relative to the bearing block 51, the first connection shaft 64 and the second connection shaft 65 come into contact with the support surfaces 68a or 68b, 69a or 69b, and 71a and 71b. Thus, the connection shaft 52 has the outer circumference surface supported at two different portions in the axial direction, and thus tilting thereof relative to the bearing block 51 is suppressed. The connection shaft 52 thus having the outer circumference surface supported at two different portions in the axial direction can be prevented from falling off the bearing block 51.

The exhaust bypass device according to the second embodiment includes the locking pins 81 and 82 serving as the second locking member that restricts the movement of the connection shaft 52 in the radial direction relative to bearing block 51.

Thus, when the connection rod 32 and the connection link 34 move via the connection member 33A, the connection shaft 52 rotates relative to the bearing block 51. Still, the locking pins 81 and 82 restrict the movement of the connection shaft 52 in the radial direction relative to the bearing block 51, whereby the connection shaft 52 can be prevented from falling off the bearing block 51.

In the exhaust bypass device according to the second embodiment, the locking pins 81 and 82 have the end portions supported by the bearing block 51, and have the intermediate portions capable of coming into contact with the outer circumference surfaces of the first connection shaft 64 and the second connection shaft 65. Thus, with the locking pins 81 and 82 of the bearing block 51 in contact with the outer circumference surfaces of the respective first connection shaft 64 and second connection shaft 65, the two points of the end portions of the connection shaft 52 are supported. The movement of the connection shaft 52 relative to the bearing block 51 in the radial direction is restricted with the tilting of the connection shaft 52 suppressed, whereby this simple configuration can easily prevent the connection shaft 52 from falling off the bearing block 51.

### Third Embodiment

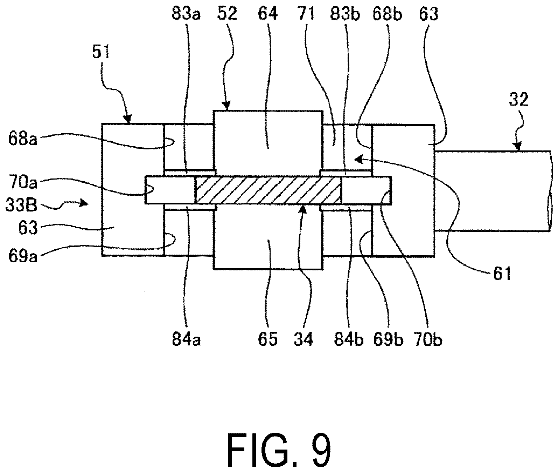

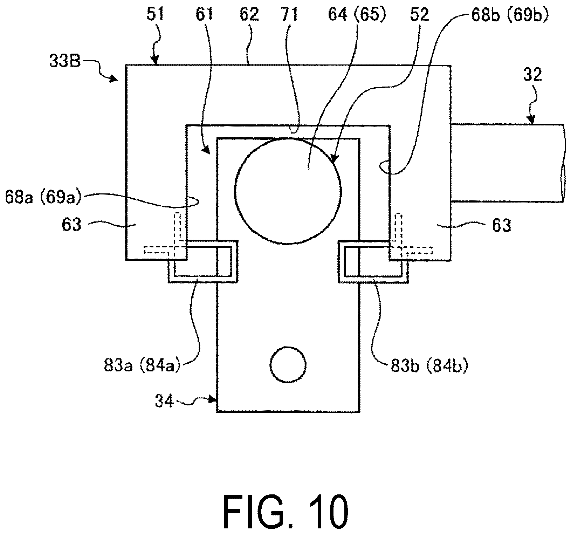

FIG. 9 is a vertical cross-sectional view of a connection member that connects a connection rod and a connection link to each other in an exhaust bypass device according to a third embodiment. FIG. 10 is a plan view of the connection member that connects the connection rod and the connection link to each other. Note that the same reference numerals are given to members having the same functions as the embodiments described above and detailed description thereof will be omitted.

In the exhaust bypass device according to the third embodiment, the connection rod 32 has a tip portion connected to a connection member 33B, as illustrated in FIG. 9 and FIG. 10. The connection link 34 has one end portion rotatably connected to the connection member 33B.

The connection member 33B includes a bearing block 51 and a connection shaft 52. The bearing block 51 is fixed to a tip portion of the connection rod 32, and the connection shaft 52 is fixed to one end portion of the connection link 34. The bearing block 51 can rotatably support a plurality of different parts in the axial direction of the connection shaft 52.

The bearing block 51 includes pressing members 83a, 83b, 84a, and 84b serving as the first and the second locking members that restrict the movement of the connection shaft 52 in the axial direction relative to bearing block 51. The pressing members 83a, 83b, 84a, and 84b are each an elastic member having a rectangular shape in plan view, obtained by bending a metal wire, a metal plate, and the like. Each of the pressing members 83a, 83b, 84a, 84b has a rectangular ring shape, and has end portions fit and fixed in the tip portion of one of the second support bodies 63, and the members have tip portions extending toward each other. The first pressing members 83a and 83b are disposed on one side of the connection link 34 in the thickness direction. The second pressing members 84a and 84b are disposed on the other side of the connection link 34 in the thickness direction. The pressing member 83a, 83b, 84a, and 84b have tip portions that can come into contact with plane portions of the connection link 34, as well as the outer circumference surfaces of the first connection shaft 64 and the second connection shaft 65. Thus, the pressing members 83a, 83b, 84a, and 84b prevent the connection shaft 52 of the connection link 34 from falling off the opening 61 of the bearing block 51 of the connection rod 32 in the axial direction and in the radial direction.

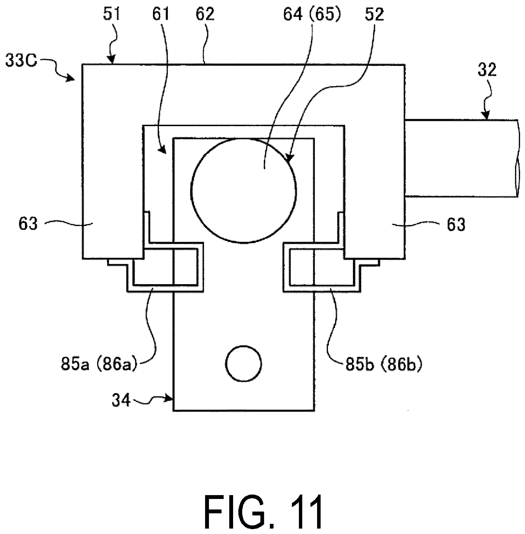

The first locking member and the second locking member are not limited to the configuration of the pressing members 83a, 83b, 84a, and 84b. FIG. 11 is a plan view illustrating a connection member that connects a connection rod and a connection link to each other, in an exhaust bypass device according to a modification of the third embodiment.

Pressing members 85a, 85b, 86a, and 86b of the connection member 33C are each an elastic member having a rectangular shape in plan view, obtained by bending a metal wire, a metal plate, and the like, as illustrated in FIG. 11. Each of the pressing members 85a, 85b, 86a, 86b has a rectangular ring shape, and has end portions fixed to an end surface of the tip portion of one of the second support bodies 63 by welding or the like, and the members have tip portions extending toward each other. The pressing member 85a, 85b, 86a, and 86b have tip portions that can come into contact with plane portions of the connection link 34, as well as the outer circumference surfaces of the first connection shaft 64 and the second connection shaft 65. Thus, the pressing members 85a, 85b, 86a, and 86b prevent the connection shaft 52 of the connection link 34 from falling off the opening 61 of the bearing block 51 of the connection rod 32 in the axial direction and in the radial direction.

In the exhaust bypass device, when the connection rod 32 moves in the axial direction, the connection link 34 rotates about the connection member 33B. When the connection shaft 52 rotates relative to the bearing block 51, the connection link 34 is supported by the pressing members 83a, 83b, 84a, and 84b (85a, 85b, 86a, and 86b), whereby the movement of the connection shaft 52 relative to the bearing block 51 in the axial direction is restricted. The first connection shaft 64 and the second connection shaft 65 of the connection shaft 52 are supported by the pressing members 83a, 83b, 84a, and 84b (85a, 85b, 86a, and 86b), whereby the movement of the connection shaft 52 relative to the bearing block 51 in the radial direction is restricted.

As described above, in the exhaust bypass device according to the third embodiment, the pairs of pressing member 83a, 83b, 84a, and 84b (85a, 85b, 86a, and 86b) supported by the bearing block 51 are provided as the first locking member, and the pairs of pressing member 83a, 83b, 84a, and 84b (85a, 85b, 86a, and 86b) can come into contact with to sandwich the plane portions of the connection link 34. Thus, with the plane portions of the connection link 34 sandwiched by the pressing members 83a, 83b, 84a, and 84b (85a, 85b, 86a, and 86b), the movement of the connection shaft 52 relative to the bearing block 51 in the axial direction is restricted. Thus, the connection shaft 52 can be easily prevented from falling off the bearing block 51, only by additionally providing the pressing members 83a, 83b, 84a, and 84b (85a, 85b, 86a, and 86b) and without modifying the connection shaft 52.

### Fourth Embodiment

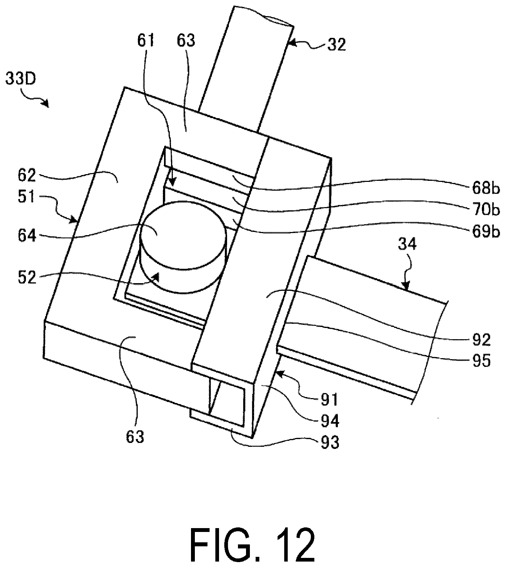

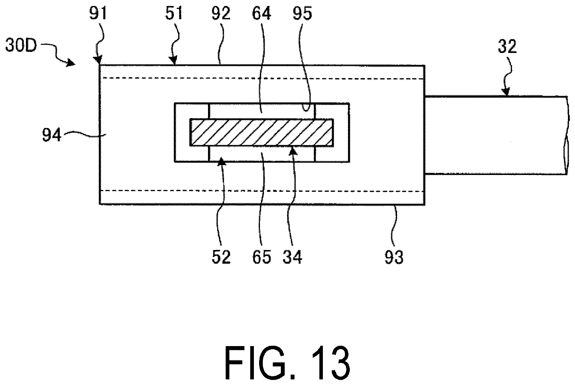

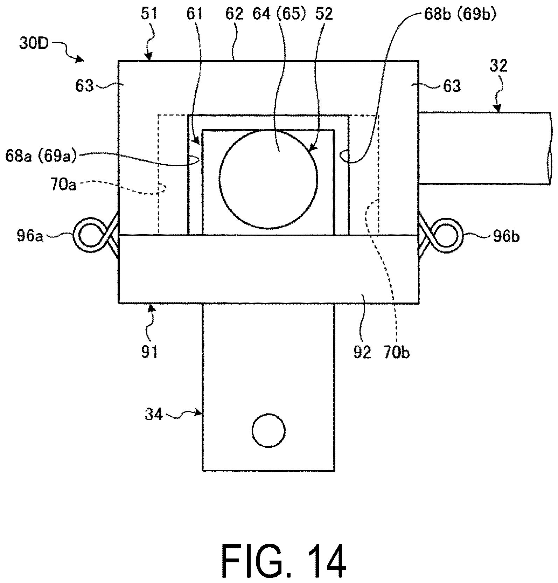

FIG. 12 is perspective view of a connection member that connects a connection rod and a connection link to each other in an exhaust bypass device according to a fourth embodiment. FIG. 13 is a vertical cross-sectional view of the connection member that connects the connection rod and the connection link to each other. FIG. 14 is a plan view of the connection member that connects the connection rod and the connection link to each other. Note that the same reference numerals are given to members having the same functions as the embodiments described above and detailed description thereof will be omitted.

In the exhaust bypass device according to the fourth embodiment, the connection rod 32 has a tip portion connected to a connection member 33D as illustrated in FIG. 12 to FIG. 14. The connection link 34 has one end portion rotatably connected to the connection member 33D.

The connection member 33D includes a bearing block 51 and a connection shaft 52. The bearing block 51 is fixed to a tip portion of the connection rod 32, and the connection shaft 52 is fixed to one end portion of the connection link 34. The bearing block 51 can rotatably support a plurality of different parts in the axial direction of the connection shaft 52.

The bearing block 51 has an opening 61. Specifically, the bearing block 51 has second support bodies 63 integrally provided on both sides of a first support body 62. The connection shaft 52 includes a first connection shaft 64 that protrudes toward the one side of the connection link 34 in the thickness direction and a second connection shaft 65 that protrudes toward the other side in the thickness direction. The connection shaft 52 is disposed in the opening 61 of the bearing block 51.

The bearing block 51 includes a pressing member 91 serving as the second locking member that restricts the movement of the connection shaft 52 in the radial direction relative to bearing block 51. The pressing member 91 has a U-shaped cross-sectional view with a pair of restriction plates 92 and 93 connected to each other via a connection plate 94, and fits to the second support bodies 63, to form a frame body together with the bearing block 51. The pressing member 91 fits to the bearing block 51 in a wedging manner with inclined surfaces, and has portions biased toward each other with a pair of coil springs 96a and 96b. The restriction plates 92 and 93 of the pressing member 91 can come into contact with the outer circumference surfaces of the connection shafts 64 and 65. Thus, the restriction plates 92 and 93 prevent the connection shaft 52 of the connection link 34 from falling off from the opening 61 of the bearing block 51 of the connection rod 32 in the radial direction.

The pressing member 91 is provided with a slit 95 serving as the first locking member that restricts the relative movement between the connection shaft 52 and the bearing block 51 in the axial direction of the connection shaft 52. Through the slit 95 provided to the pressing member 91, the opening 61 communicates with the outside. The connection link 34 has one end portion extending into the opening 61 through the slit 95 of the pressing member 91, and is fixed to the connection shaft 52.

In the exhaust bypass device with the configuration described above, when the connection rod 32 moves in the axial direction, the connection link 34 rotates about the connection member 33D. When the connection shaft 52 rotates relative to the bearing block 51, the connection link 34 is supported by the pressing member 91, whereby the movement of the connection shaft 52 relative to the bearing block 51 in the radial direction is restricted. The connection link 34 is positioned in the slit 95 of the pressing member 91, whereby the movement of the connection shaft 52 relative to the bearing block 51 in the axial direction is restricted.

As described above, in the exhaust bypass device according to the fourth embodiment, the pressing member 91 serving as the second locking member is attached to the bearing block 51, and is provided with the slit 95 serving as the first locking member. The connection link 34 is inserted through the slit 95.

The configuration with the slit 95 thus serving as the first locking member can have a simplified structure to prevent part cost from rising. The configuration further has the connection link 34 provided with the connection shaft 52 inserted in the slit 95, so that the connection shaft 52 can be prevented from falling off the bearing block 51 in the axial direction, and the tilting of the connection shaft 52 relative to the bearing block 51 can be suppressed.

### Fifth Embodiment

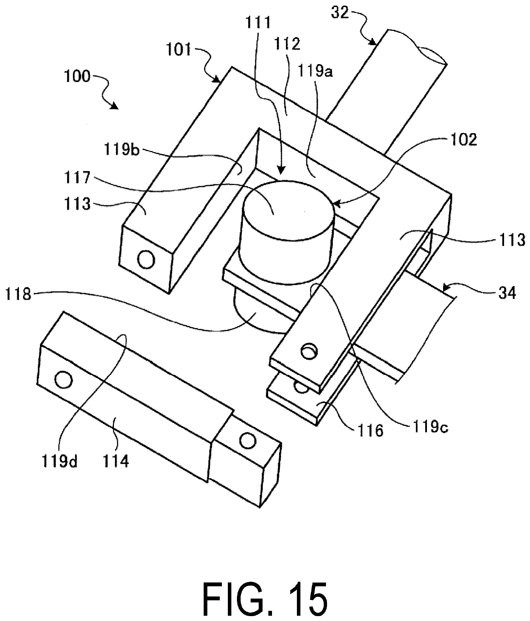

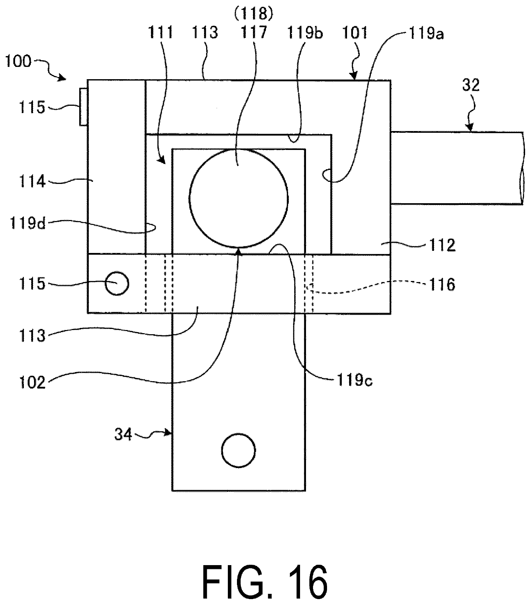

FIG. 15 is a perspective view of an assembled state illustrating a connection member that connects a connection rod and a connection link to each other in an exhaust bypass device according to a fifth embodiment. FIG. 16 is a plan view of the connection member that connects the connection rod and the connection link to each other.

In the exhaust bypass device according to the fifth embodiment, the connection rod 32 has a tip portion connected to a connection member 100, as illustrated in FIG. 15 and FIG. 16. The connection link 34 has one end portion rotatably connected to the connection member 100.

The connection member 100 includes a bearing block 101 serving as a bearing member, and a connection shaft 102. The bearing block 101 is fixed to a tip portion of the connection rod 32, and the connection shaft 102 is fixed to one end portion of the connection link 34. The bearing block 101 can rotatably support a plurality of different parts in an axial direction of the connection shaft 102.

The bearing block 101 has a rectangular frame shape in plan view, and has an opening 111 at a center portion. The bearing block 101 has second support bodies 113 integrally provided on both sides of a first support body 112, and has third support bodies 114 detachably attached to tip portions of the second support bodies 113. The third support bodies 114 can be detachably attached to the second support bodies 113 with a fastening bolt 115. One of the second support bodies 113 is provided with a slit 116 through which the opening 111 communicates with the outside. The bearing block 101 has the tip portion of the connection rod 32 fixed to the first support body 112. The connection shaft 102 is fixed while being provided through one end portion of the connection link 34 in a thickness direction, and thus includes a first connection shaft 117 that protrudes toward the one side of the connection link 34 in the thickness direction and a second connection shaft 118 that protrudes toward the other side in the thickness direction.

The connection shaft 102 is disposed in the opening 111 of the bearing block 101. The connection link 34 to which the connection shaft 102 is fixed extends into the opening 111 through the slit 116 of the second support body 113 from the outside. In the present embodiment, the slit 116 provided to the bearing block 101 serves as the first locking member, and restricts the movement of the connection link 34 and the connection shaft 102 relative to the bearing block 101 in the axial direction. The second support body 113, on which the slit 116 is formed, of the bearing block 112 serves as the second locking member, and restricts the relative movement between the connection shaft 102 and the bearing block 101 in the radial direction of the connection shaft 102.

The bearing block 101 has an inner surface including four support surfaces 119a, 119b, 119c, and 119d. The support surfaces 119a, 119b, 119c, and 119d face the outer circumference surfaces of the first connection shaft 117 and the second connection shaft 118. Thus, when the connection shaft 102 moves in the radial direction relative to the bearing block 101, the outer circumference surfaces of the first connection shaft 117 and the second connection shaft 118 come into contact with the support surfaces 119a, 119b, 119c, and 119d, whereby application of moment on the connection shaft 102 is suppressed and the angle of the connection shaft 102 relative to the bearing block 101 does not change, that is, the tilting of the connection shaft 102 relative to the bearing block 101 is suppressed.

As described above, in the exhaust bypass device according to the fifth embodiment, the opening 111 is provided in the center portion of the bearing block 101, and the connection shaft 102 is provided in the opening 111. The inner surface of the opening 111 includes the support surfaces 119a, 119b, 119c, and 119d that rotatably support the outer circumference surfaces of the first connection shaft 117 and the second connection shaft 118. One end portion of the connection link 34 extends into the opening 111 through the slit 116, and the connection shaft 102 is fixed.

Thus, when the connection rod 32 and the connection link 34 rotate via the connection member 100, the connection shaft 102 rotates relative to the bearing block 101, with the support surfaces 119a, 119b, 119c, and 119d rotatably supporting the outer circumference surfaces of the first connection shaft 117 and the second connection shaft 118 forming the connection shaft 102. Thus, even when swinging force is applied to the connection shaft 102, the outer circumference surfaces of the first connection shaft 117 and the second connection shaft 118 come into contact with the support surface 119a, 119b, 119c, and 119d so that two point support is achieved to suppress the rotational moment about the connection link 34 applied to the connection shaft 102. As a result, wearing of the operation portion can be reduced, while ensuring a favorable operation of the waste gate valve 37.

### Sixth Embodiment

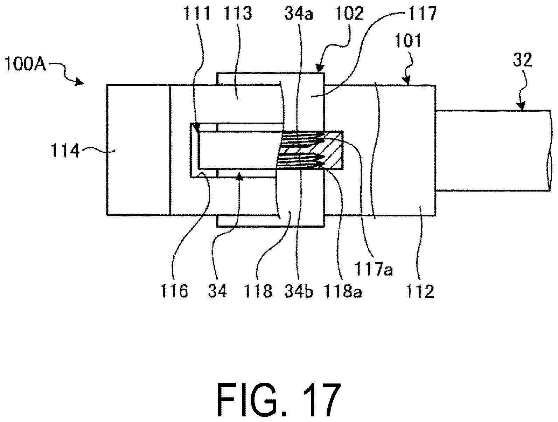

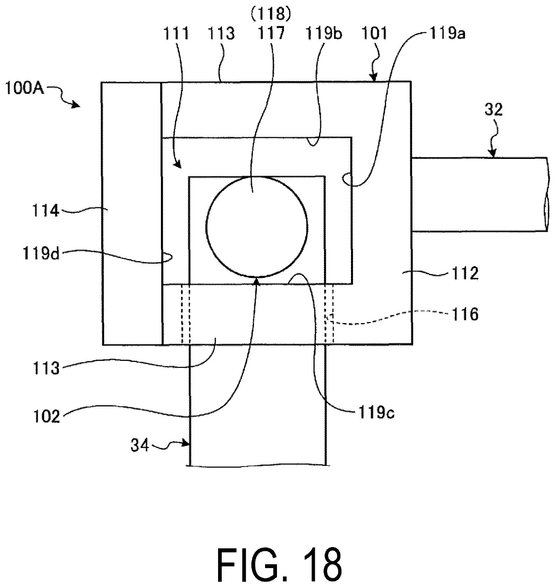

FIG. 17 is a vertical cross-sectional view of a connection member that connects a connection rod and a connection link to each other in an exhaust bypass device according to a sixth embodiment. FIG. 18 is a plan view of the connection member that connects the connection rod and the connection link to each other. Note that the same reference numerals are given to members having the same functions as the embodiments described above and detailed description thereof will be omitted.

In the exhaust bypass device according to the sixth embodiment, the connection rod 32 has a tip portion connected to a connection member 100A, as illustrated in FIG. 17 and FIG. 18. The connection link 34 has one end portion rotatably connected to the connection member 100A.

The connection member 100A includes a bearing block 101 and a connection shaft 102. The bearing block 101 is fixed to a tip portion of the connection rod 32, and the connection shaft 102 is fixed to one end portion of the connection link 34. The bearing block 101 can rotatably support a plurality of different parts in the axial direction of the connection shaft 102.

The bearing block 101 has an opening 111 provided at its center portion, and a slit 116 is formed on one of second support bodies 113 forming the bearing block 101. The connection shaft 102 includes a first connection shaft 117 that protrudes toward the one side of the connection link 34 in the thickness direction and a second connection shaft 118 that protrudes toward the other side in the thickness direction. The connection link 34 extends into the opening 111 through the slit 116 of the second support body 113 from the outside, and the connection shaft 102 fixed to the tip portion disposed in the opening 111 of the bearing block 101.

The connection link 34 has screw holes 34a and 34b formed at concentric positions on a plane portion of the tip portion. The first connection shaft 117 and the second connection shaft 118 have end portions in the axial direction provided with screw portions 117a and 118a. The first connection shaft 117 and the second connection shaft 118 have the screw portions 117a and 118a screwed into the screw holes 34a and 34b. Thus, the first connection shaft 117 and the second connection shaft 118 are detachably connected to the connection link 34.

Thus, when the connection rod 32, the connection member 100A, and the connection link 34 are assembled, the first connection shaft 117 and the second connection shaft 118 can be attached to one end portion of the connection link 34 that has been inserted in the opening 111 through the slit 116 of the bearing block 101.

As described above, the exhaust bypass device according to the sixth embodiment has the connection shafts 117 and 118 detachably attached to the connection link 34. When the connection rod 32 and the connection link 34 are connected to each other via the connection member 100A, the first connection shaft 117 and the second connection shaft 118 can be attached to one end portion of the connection link 34 that has been inserted in the opening 111 through the slit 116 of the bearing block 101, which enables easy assembly. When maintenance is performed, the connection link 34 and the bearing block 101 can be easily disconnected from each other with the connection shafts 117 and 118 detached from the connection link 34, whereby higher maintainability can be achieved.

### Seventh Embodiment

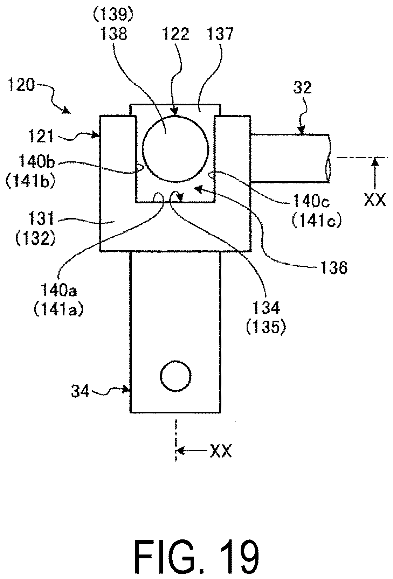

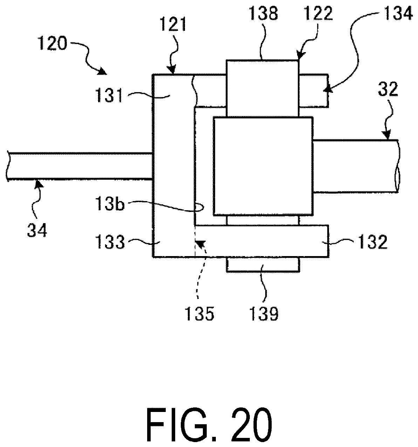

FIG. 19 is a plan view of a connection member that connects a connection rod and a connection link to each other in an exhaust bypass device according to a seventh embodiment. FIG. 20 is a vertical cross-sectional view of the connection member that connects the connection rod and the connection link to each other, taken along line XX-XX in FIG. 19. Note that the same reference numerals are given to members having the same functions as the embodiments described above and detailed description thereof will be omitted.

In the exhaust bypass device according to the seventh embodiment, the connection rod 32 has a tip portion connected to a connection member 120, as illustrated in FIG. 19 and FIG. 20. The connection link 34 has one end portion rotatably connected to the connection member 120.

The connection member 120 includes a bearing block 121 serving as a bearing member, and a connection shaft 122. The bearing block 121 is connected to one end portion of the connection link 34, and the connection shaft 122 is fixed to a tip portion of the connection rod 32. The bearing block 121 can rotatably support a plurality of different parts in an axial direction of the connection shaft 122.

The bearing block 121 has a pair of connection plates 131 and 132, facing each other with a predetermined gap in between and connected to each other via a vertical wall portion 133. One end portion of the connection link 34 is connected to the vertical wall portion 133. The pair of connection plates 131 and 132 have notches 134 and 135 formed on a side opposite to the vertical wall portion 133 to form a U shape in plan view, and each have an opening 136 at a center portion. The connection shaft 122 is provided through a support portion 137 fixed to the tip portion of the connection rod 32 to be fixed, to have a first connection shaft 138 and a second connection shaft 139.

The connection shaft 122 is disposed in the opening 136 of the bearing block 121. In the present embodiment, the connection plates 131 and 132 forming the bearing block 121 serves as the first locking member to restrict the movement of the connection rod 32 and the connection shaft 122 in the axial direction relative to the bearing block 121.

In the bearing block 121, an inner surface of the first notch 134 of the first connection plate 131 includes first support surfaces 140a, 140b, and 140c, and an inner surface of the second notch 135 of the second connection plate 132 includes second support surfaces 141a, 141b, and 141c. The first support surfaces 140a, 140b, and 140c face the outer circumference surface of the first connection shaft 138, and the second support surfaces 141a, 141b, and 141c face the outer circumference surface of the second connection shaft 139. Thus, when the connection shaft 122 moves in the radial direction relative to the bearing block 121, the outer circumference surfaces of the first connection shaft 138 and the second connection shaft 139 come into contact with the support surfaces 140a, 140b, 140c, 141a, 141b, and 141c, whereby application of moment on the connection shaft 122 is suppressed and the angle of the connection shaft 102 relative to the bearing block 121 does not change so that the tilting of the connection shaft 122 relative to the bearing block 121 is suppressed.

As described above, in the exhaust bypass device according to the seventh embodiment, one end portion of the connection link 34 is rotatably connected to the tip portion of the connection rod 32 via the connection member 120. The connection member 120 includes the connection shaft 122 provided to the connection rod 32, and the bearing block 121 that is provided to the connection link 34 and serves as the bearing member that rotatably supports the plurality of different parts in the axial direction of the connection shaft 122.

Thus, when the connection rod 32 and the connection link 34 rotate via the connection member 120, the plurality of different parts in the axial direction of the outer circumference surface of the connection shaft 122 are supported by the bearing block 121. Thus, application of moment of rotation about the connection rod 32 to the connection shaft 122 is suppressed, whereby tilting of the connection shaft 122 relative to the bearing block 121 is suppressed. As a result, vibration of the connection link 34 due to the exhaust pulsation is suppressed, whereby the wearing of the operation portion can be suppressed to improve reliability, with a favorable operation of the waste gate valve 37 ensured.

In the first to the sixth embodiments of the embodiments described above, the connection rod 32 is provided with the bearing block 51, 101 serving as the bearing member and the connection link 34 is provided with the connection shaft 52, 102. In the seventh embodiment, the connection rod 32 is provided with the connection shaft 122, and the connection link 34 is provided with the bearing block 121 serving as the bearing member. Note that any of the relationships between the bearing member (bearing block) and the connection shaft regarding the attachment to the connection rod 32 and the connection link 34 may be employed.

In the above-described embodiment, the bearing blocks 51, 101, and 121 having rectangular column shape (U shape or frame shape) serves as the bearing member. However, the shape should not be construed in a limiting sense, and a ring shape may be employed.

In the above described embodiments, the connection rod 32 is connected to the tip portion of the driving rod 41, and the tip portion of the connection rod 32 and one end portion of the connection link 34 are rotatably connected by the connection member 33, 33A, 33B, 33C, 33D, 100, 100A, 120. Alternatively, the tip portion of the driving rod 41 and one end portion of the connection link 34 may be rotatably connected by the connection member 33, 33A, 33B, 33C, 33D, 100, 100A, 120 directly.

### Reference Signs List

10 Engine
11 Engine main body
13 Piston
15 Combustion chamber
21 Intake path
22 Discharge path
23 Turbocharger
24 Compressor
25 Turbine
26 Rotation shaft
28 Exhaust bypass device
29 Bypass path
30 Operation path
31 Actuator
32 Connection rod
33, 33A, 33B, 33C, 33D, 100, 100A, 120 Connection member
34 Connection link
35 Support shaft
36 Support cylinder (housing)
37 Waste gate valve
41 Driving rod
43 Connection portion
51, 101, 121 Bearing block (bearing member)
52, 102, 122 Connection shaft
61, 111, 136 Opening
64, 117, 138 First connection shaft
65, 118, 139 Second connection shaft
66 First locking pin (first locking member)
67 Second locking pin (first locking member)
68a, 68b, 140a, 140b, 140c First support surface
69a, 69b, 141a, 141b, 141c Second support surface
70a, 70b Groove portion
71 Third support surface
81 First locking pin (second locking member)
82 Second locking pin (second locking member)
83a, 83b, 85a, 85b First pressing member (first locking member, pressing member)
84a, 84b, 86a, 86a Second pressing member (first locking member, pressing member)
91 Pressing member (second locking member)
95, 116 Slit (first locking member)
119a, 119b, 119c, 119d Support surface
131 First connection plate (first locking member)
132 Second connection plate (first locking member)

## Claims

1. An exhaust bypass device comprising:
an actuator that reciprocates a driving rod in an axial direction;
a support shaft rotatably supported by a housing;
a connection link that has one end portion rotatably connected to a tip portion of the driving rod via a connection member, and another end portion fixed to one end portion of the support shaft in the axial direction; and
a waste gate valve that is connected to the other end portion of the support shaft in the axial direction, wherein
the connection member comprises:
a connection shaft that is provided to one of the driving rod and the connection link; and
a bearing member that is provided to the other one of the driving rod and the connection link, and rotatably supports a plurality of different parts in an axial direction of the connection shaft.

2. The exhaust bypass device according to claim 1 further comprising a first locking member that restricts relative movement between the connection shaft and the bearing member in the axial direction of the connection shaft.

3. The exhaust bypass device according to claim 2, wherein the first locking member is a pair of locking pins that each penetrate, along a radial direction, corresponding one of end portions of the connection shaft in the axial direction, and each of ends of the pair of locking pins in a longitudinal direction is able to come into contact with the bearing member.

4. The exhaust bypass device according to claim 2, wherein the first locking member is a pair of pressing members supported by the bearing member, and the pair of pressing members are able to come into contact with the one of the driving rod or the connection link to which the connection shaft is provided.

5. The exhaust bypass device according to claim 2, wherein the first locking member is a slit provided to the bearing member, and the one of the driving rod and the connection link to which the connection shaft is provided is inserted in the slit.

6. The exhaust bypass device according to any one of claims 2 to 5, wherein the first locking member is an elastic member.

7. The exhaust bypass device according to any one of claims 1 to 6 further comprising a second locking member that restricts relative movement between the connection shaft and the bearing member in a radial direction of the connection shaft.

8. The exhaust bypass device according to claim 7, wherein the second locking member is provided to the bearing member and is able to come into contact with an outer circumference surface of the connection shaft.

9. The exhaust bypass device according to any one of claims 1 to 8, wherein
the bearing member is a bearing block provided with an opening to have a side portion open, and
in the opening, the connection shaft is disposed and a pair of support surfaces are provided that each rotatably support an outer circumference surface of a corresponding one of end portions of the connection shaft in the axial direction.

10. The exhaust bypass device according to any one of claims 1 to 8, wherein
the bearing member is a bearing block having a center portion provided with an opening,
in the opening, the connection shaft is disposed and a pair of support surfaces are provided that each rotatably support an outer circumference surface of a corresponding one of end portions of the connection shaft in the axial direction, and the driving rod or the connection link is inserted through the bearing block to be connected to the connection shaft.

11. The exhaust bypass device according to claim 10, wherein the connection shaft is detachably connected to the one of the driving rod and the connection link.

12. A turbocharger comprising:
a compressor:
a turbine;
a rotation shat that coaxially connects the compressor and the turbine to each other; and
the exhaust bypass device according to any one of claims 1 to 11.

## Amended claims

### Amended claims under Art. 19.1 PCT

1. (Amended)
An exhaust bypass device comprising:
an actuator that reciprocates a driving rod in an axial direction;
a support shaft rotatably supported by a housing;
a connection link that has one end portion rotatably connected to a tip portion of the driving rod via a connection member, and another end portion fixed to one end portion of the support shaft in the axial direction; and
a waste gate valve that is connected to the other end portion of the support shaft in the axial direction, wherein
the connection member comprises:
a connection shaft that is provided to one of the driving rod and the connection link; and
a bearing member that is provided to the other one of the driving rod and the connection link, and rotatably supports a plurality of parts having different axial directions of the connection shaft,
an end portion of the one of the driving rod and the connection link is disposed in the opening,
the connection shaft includes a first connection shaft protruding toward one side in a thickness direction of the one of the driving rod and the connection link, and a second connection shaft protruding toward another side in the thickness direction, and
the bearing member rotatably supports the first connection shaft and the second connection shaft.

2. The exhaust bypass device according to claim 1 further comprising a first locking member that restricts relative movement between the connection shaft and the bearing member in the axial direction of the connection shaft.

3. The exhaust bypass device according to claim 2, wherein the first locking member is a pair of locking pins that each penetrate, along a radial direction, corresponding one of end portions of the connection shaft in the axial direction, and each of ends of the pair of locking pins in a longitudinal direction is able to come into contact with the bearing member.

4. The exhaust bypass device according to claim 2, wherein the first locking member is a pair of pressing members supported by the bearing member, and the pair of pressing members are able to be in contact with the one of the driving rod or the connection link to which the connection shaft is provided.

5. The exhaust bypass device according to claim 2, wherein the first locking member is a slit provided to the bearing member, and the one of the driving rod and the connection link to which the connection shaft is provided is inserted in the slit.

6. The exhaust bypass device according to any one of claims 2 to 5, wherein the first locking member is an elastic member.

7. The exhaust bypass device according to any one of claims 1 to 6 further comprising a second locking member that restricts relative movement between the connection shaft and the bearing member in a radial direction of the connection shaft.

8. The exhaust bypass device according to claim 7, wherein the second locking member is provided to the bearing member and is able to come into contact with an outer circumference surface of the connection shaft.

9. The exhaust bypass device according to any one of claims 1 to 8, wherein
the bearing member is a bearing block provided with an opening to have a side portion open, and
in the opening, the connection shaft is disposed and a pair of support surfaces are provided that each rotatably support an outer circumference surface of a corresponding one of end portions of the connection shaft in the axial direction.

10. The exhaust bypass device according to any one of claims 1 to 8, wherein
the bearing member is a bearing block having a center portion provided with an opening,
in the opening, the connection shaft is disposed and a pair of support surfaces are provided that each rotatably support an outer circumference surface of a corresponding one of end portions of the connection shaft in the axial direction, and
the driving rod or the connection link is inserted through the bearing block to be connected to the connection shaft.

11. The exhaust bypass device according to claim 10, wherein the connection shaft is detachably connected to the one of the driving rod and the connection link.

12. A turbocharger comprising:
a compressor:
a turbine;
a rotation shat that coaxially connects the compressor and the turbine to each other; and
the exhaust bypass device according to any one of claims 1 to 11.

Statement under Art. 19.1 PCT
Claim 1 is amended to provide a further limitation to the configuration of the bearing member. This amendment is based on the description in the paragraph [0052] of the specification.

Claim 1 is amended to provide a further limitation to the configuration of the connection shaft. This amendment is based on the description in the paragraphs [0052] and [0053] of the specification.
